# EUROPEAN PATENT SPECIFICATION

(11) **EP 0 456 931 B1**
(45) Date of publication and mention of the grant of the patent: **17.04.1996**
(21) Application number: 90309894.5
(22) Date of filing: 10.09.1990
(51) Int. Cl.: B65G 53/58, F15D 1/00

(54) **Coanda spiral flow device**
Coandaspiraldurchflussvorrichtung
Dispositif d'écoulement à spirale Coanda

(30) Priority: 18.05.1990 JP 128289/90
(43) Date of publication of application: 21.11.1991
(73) Proprietor: Horii, Kiyoshi, Tokyo (JP); TOA KIKAI KOGYO CO., LTD., Shimonoseki-shi, Yamaguchi (JP)
(72) Inventor: Horii, Kiyoshi, Tokyo (JP); Oosumi, Kakuji, Yamaguchi (JP)
(74) Representative: Leale, Robin George

(56) References cited:
- WO-A-90/08083
- DE-A- 1 431 782
- DE-B- 1 263 658
- FR-A- 2 637 880
- GB-A- 994 811
- US-A- 1 444 069
- US-A- 2 310 265

## Description

The present invention relates generally to a coanda spiral flow device. More specifically, it relates to a coanda spiral flow device which is useful as a flow system unit in the operations of material transportation, drying, and reaction processing, as well as gas supply, mixing and separation, and which is easy to produce and maintain.

Previously, a number of proposals have been made by the inventors of the present invention for the generation of a spiral flow and its application which permits the high-speed conveyance of gases, powdered materials, fibers, cables or other materials and involves a flow system reaction entirely different from the conventional concepts of turbulent flow or laminar flow. The unique phenomenon, a long-distance spiral flow, which makes use of the coanda effect as a fluid phenomenon and which has not been conceived by the conventional application of the coanda effect, has been established as a practical process technology.

A coanda spiral flow is characterized by a vast difference in velocity and density between the axial flow of a fluid and the flow around the axial one, and shows steep velocity distribution. For instance, the degree of turbulence indicates 0.09, i.e. less than half of 0.2 indicated for turbulent flow, showing that coanda spiral flow involves immensely different conditions from turbulent flow. In addition, it is formed as a unique spiral flow by the synthesis of axial vector and radial vector.

This coanda spiral flow is a flow which converges on the pipe axis in a pipe, and possesses superior characteristics in that it has a small degree of turbulence and it can prevent hard collisions and contacts with the pipe inner wall due to the automatic vibration of the conveyed object.

A device for the generation of coanda spiral flow is essential for the application of the concept to a process technology. Coanda spiral flow devices of various forms have been provided heretofore; for example, one having two interconnected units is known.

However, it was difficult to construct a coanda spiral flow device having such a unit construction, and it was far from easy to control the coanda slit clearance, to achieve the desired spiral flow, to an accuracy of the order of 0.01mm during an assembly operation. Thus it was virtually impossible to assemble and use a coanda spiral flow unit at a job site at any time.

Consequently, realization of a coanda spiral flow device which can be assembled at an appropriate site, e.g. a plant of a construction site, at any time and which permits easy adjustment of coanda slit clearance, has been strongly desired.

A device for use in generating coanda helical fluid flow comprising a tubular upstream unit with a through bore, a tubular downstream unit with a through bore which tapers inwardly in the downstream direction for at least part of its length, and a connecting unit arranged to interconnect the said upstream and downstream units in continuous tubular fashion and in such manner that an annular slit for generating coanda helical fluid flow in the downstream unit is defined between the adjacent ends of the said units, the width of which slit is adjustable by adjustment of the connection between the upstream and/or downstream unit and the connecting unit, whereby the connecting unit forms an annular chamber surrounding the annular slit; is known from e.g. EP 0347018 (Fukuvi Chemical Industry Co., et al).

The invention is characterised in that the annular chamber communicating with an inlet for compressed gas via two conduits which open into substantially opposite sides of the annular chamber periphery to supply compressed gas evenly to the chamber.

An embodiment of the invention will now be described by way of example and with reference to the accompanying drawings, in which:-
Figs. 1 (a), (b) and (c) are a left side elevation view, a plan view and a right side elevation view, respectively, of a coanda spiral flow device according to the present invention;
Figs. 2 and 3 are an X-X sectional view and a Y-Y sectional view of Fig. 1 (b), respectively; and
Fig. 4 is a schematic drawing showing an example of use of the coanda spiral flow device of Figs. 1 to 3.

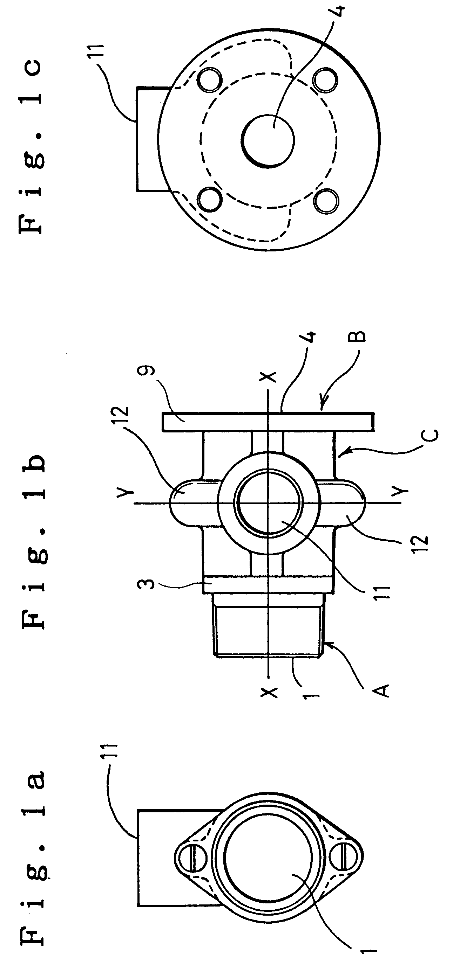

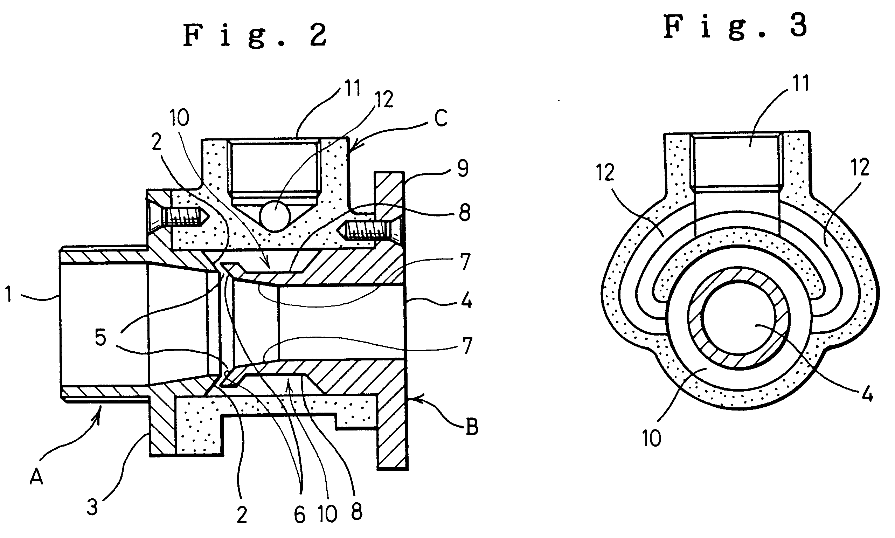

As illustrated in Figs. 1 (a), (b) and (c) and Fig. 2, a coanda spiral flow device according to the present invention comprises a first unit A, a second unit B and an outer peripheral tube unit C which partially covers the first unit A and the second unit B and couples them together.

The first unit A has a introducing port 1 at one end, an inclined or erect circumferential surface 2 on its outer circumference at the end opposite to the port 1, and a coupling flange 3.

The second unit B has a discharge outlet 4 at one end, an inclined or curved circumferential surface 6 on its inner circumference at the end opposite from the outlet 4, where the bore is larger than that of the outlet 4, the surface 6 forming a coanda slit 5 in conjunction with the surface 2 of the first unit A, a conically tapered surface 7 extending from said surface 6 towards said discharge outlet 4, an annular groove 8 on the outer circumference adjacent the end formed with the surface 6, and a coupling flange 9.

As becomes evident from the above described features of the first unit A and the second unit B, there are no threaded portions or bolted portions which directly couple together the units A and B in the coanda spiral flow device of the present embodiment. Accordingly, it becomes very easy to form the inclined or erect circumferential surface 2 on the outer circumference of unit A, the inclined or curved circumferential surface 6 on the inner circumference of unit B, and the annular groove 8 on unit B, thus permitting the accuracy of the dimensions and the surface smoothness of these parts to be improved remarkably.

The outer peripheral tube unit C is a coupling means to couple the first unit A with the second unit B, while achieving a specified clearance of the coanda slit 5 to high precision. The ends of the unit C closely engage with the coupling flange 3 of the first unit A and the coupling flange 9 of the second unit B, respectively, to link the units A and B together. As shown in Figs. 2 and 3, the outer peripheral tube unit C covers the annular groove 8 in the second unit B to form a ventilation distribution chamber 10 which communicates with a compressed gas inlet port 11 via conduits 12.

The interconnection of the first unit A, the second unit B and the outer peripheral tube unit C can be easily effected by threaded fastenings at the coupling flanges 3 and 9. By adjustment of the threaded fastenings, the clearance of the coanda slit 5 through which compressed gas is fed can be set to a specified gap. The outer peripheral tube unit C is removable from the first and second units A and B. Various kinds of first unit A, second unit B and outer peripheral tube unit C, which are designed in advance to form the specified coanda slit 5, may be envisaged. This eliminates the difficulty which is inherent if the coanda slit 5 is adjusted during assembly as in the case of a conventional coanda spiral unit, and thus permits the occasional assembly of the units at a job site, thereby remarkably improving convenience, and process accuracy and efficiency.

As has been described above, since the outer peripheral tube unit C is provided with the conduit 12, compressed gas can be supplied evenly to the ventilation distribution chamber 10, and the problem of providing constant pressure, which occurs in a conventional unit, can also be overcome.

In the coanda spiral flow device of the present embodiment, a compressor and a gas bomb can be used, as conventionally, to supply compressed gas at a pressure of approximately 2 to 10kg/cm², thereby making it possible to convey materials and goods at high speeds. For example, 25 to 30m of optical fibers or other cables can be passed through a tube in a few seconds to minutes, and even approximately 250m cables can be passed. High-speed conveyance, drying and reaction, as well as the classification of metals, ceramics, polymers or other powdered materials can also be performed.

### EXAMPLE 1

The coanda spiral flow unit illustrated in Figs. 1 to 3 was manufactured with the bore of the end introducing port 1 being 33mm in diameter, the bore of the outlet 4 21mm in diameter, the bore of the outer peripheral tube unit C 38mm and its length 56mm, and the clearance of the coanda slit 5 0.18mm.

It was easy to manufacture such a unit, and the coanda slit 5 showed an excellent accuracy.

### EXAMPLE 2

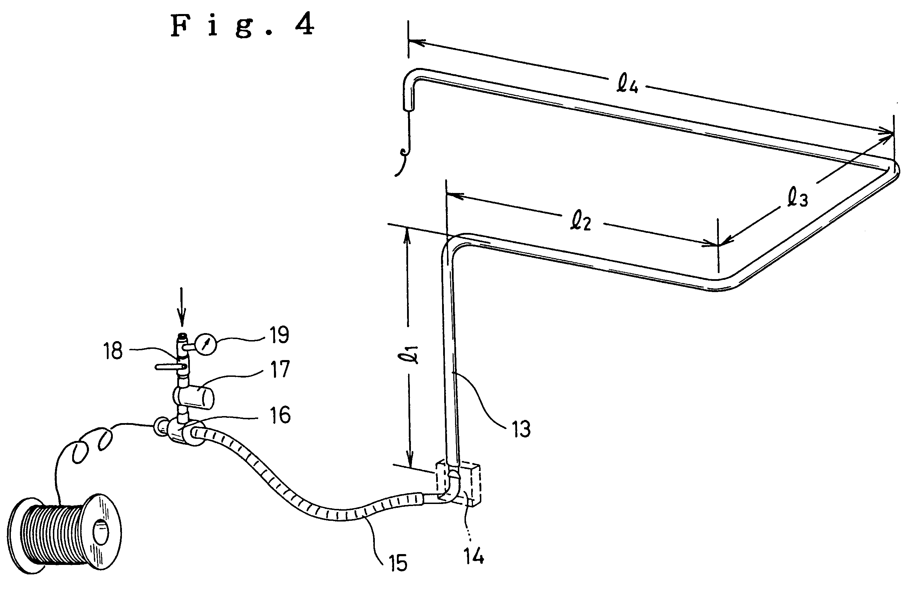

Using a unit manufactured as in EXAMPLE 1, and referring now to Fig.4, a polyethylene rope was passed through a passage 13 having a total length of 25m consisting of 1₁=5m, 1₂=5m, 1₃=5m, and 1₄=10m. A 22mm-dia. CD pipe was used as the passage 13, and the diameter of the polyethylene rope was 3mm.

The passage 13 was connected to a flexible hose 15 at a joint box 14, and the foregoing coanda spiral flow unit, indicated at 16, was linked to the flexible hose 15, which was 1.5m long.

The coanda spiral flow unit 16 was provided with an air filter 17, an opening and closing valve 18 and a pressure gauge 19. Compressed air was supplied using a compressor.

Using compressed air with a pressure of 6kg/cm², a cable could be passed through the 25m-long passage 13 in as short a time as a few seconds. The passing operation proceeded smoothly. The inclined angle of the tapered wall surface 7 of the second unit B of the coanda spiral flow device was set at 15°, and the angle of inclined surface 6 was set at 60°.

When a similar operation was conducted using a N₂ gas bomb of 150kg/cm², it could be performed very smoothly at a pressure of 6kg/cm².

Moreover, 2.8mm-dia. optical cable with a connecting terminal was similarly passed through a 22mm-bore and 25m-long passage. A smooth passing operation was achieved in approximately 2 minutes without any damage to the cable.

### EXAMPLE 3

Using the coanda spiral flow unit manufactured as in EXAMPLE 1, silica grains with a mean grain size of 2 mm were conveyed. At a compressed air pressure of 3kg/cm², the smooth conveyance of the silica grains through a 30m-long passage was realized. Virtually no collision or friction of the silica grains against the inner wall could be recognized. The moisture ratio was reduced to 70% of the original value after one pass. The drying effect was also good.

Using another coanda spiral flow unit which differed from the one of EXAMPLE 1 in having a 0.24mm coanda slit, favorable conveyance and drying effect were also achieved.

It goes without saying that the present invention is not limited to the examples as described above. Various modifications of such a device are possible depending on the size of the unit, coanda slit clearance, compressed gas pressure, bore, and length of passage.

## Claims

1. A device for use in generating coanda helical fluid flow, comprising a tubular upstream unit (A) with a through bore, a tubular downstream unit (B) with a through bore which tapers inwardly in the downstream direction for at least part of its length, and a connecting unit (C) arranged to interconnect the said upstream and downstream units in continuous tubular fashion and in such manner that an annular slit (5) for generating coanda helical fluid flow in the downstream unit is defined between the adjacent ends of the said units, the width of which slit is adjustable by adjustment of the connection between the upstream and/or downstream unit and the connecting unit, whereby the connecting unit forms an annular chamber (10) surrounding the annular slit (5), characterised in that the annular chamber communicating with an inlet (11) for compressed gas via two conduits (12) which open into substantially opposite sides of the annular chamber periphery to supply compressed gas evenly to the chamber.

2. A device as claimed in claim 1, wherein said upstream unit is formed with an erect or inclined outer circumferential surface (2) at its downstream end to define the upstream side of said slit (5), and an external coupling flange (3); said downstream unit is formed with an inclined or curved inner circumferential surface (6) at its upstream end to define the downstream side of said slit, the said inwardly tapering part of the bore of said downstream unit comprising a tapered inclined surface (7) extending from said inclined or curved surface (6) in the downstream direction, an annular groove (8) on its outer surface adjacent its upstream end, and an external coupling flange (9); and the said connecting unit (C) comprises a removable outer peripheral tubular unit which, when assembled with the said upstream and downstream units, covers the said slit and the said annular groove on the downstream unit, and has both of its ends in sealing contact with the said coupling flanges of the upstream and downstream units so as to define the chamber (10) by cooperation with said annular groove.

3. A device as claimed in claim 2, wherein the said connecting unit (C) is formed with a conduit (12) for supplying compressed gas evenly to the said distribution chamber (10).

## Patentansprüche

1. Vorrichtung zur Verwendung bei der Erzeugung einer helixartigen Koanda-Fluidströmung, umfassend eine rohrförmige stromaufwärtige Einheit (A) mit einer Durchgangsbohrung, eine rohrförmige stromabwärtige Einheit (B) mit einer Durchgangsbohrung, welche sich auf zumindest einem Teil ihrer Länge in Richtung stromabwärts nach innen verjüngt, und eine Verbindungseinheit (C), welche zur Verbindung der stromaufwärtigen und der stromabwärtigen Einheit in durchgehend rohrförmiger Weise und solcherart ausgeführt ist, daß zwischen den benachbarten Enden der Einheiten ein ringförmiger Schlitz (5) zur Erzeugung der helixartigen Koanda-Fluidströmung in der stromabwärtigen Einheit begrenzt ist, wobei die Weite dieses Schlitzes durch Einstellung der Verbindung zwischen der stromaufwärtigen und/oder der stromabwärtigen Einheit und der Verbindungseinheit einstellbar ist, wobei die Verbindungseinheit eine den ringförmigen Schlitz (5) umschließende Ringkammer (10) bildet,
**dadurch gekennzeichnet**,
daß die Ringkammer über zwei Kanäle (12), welche sich in im wesentlichen entgegengesetzte Seiten des Ringkammerumfangs öffnen, mit einem Einlaß (11) für komprimiertes Gas in Verbindung steht, um der Kammer komprimiertes Gas gleichmäßig zuzuführen.

2. Vorrichtung nach Anspruch 1, bei der die stromaufwärtige Einheit mit einer aufrechten oder geneigten Außenumfangsfläche (2) an ihrem stromabwärtigen Ende ausgeführt ist, um die stromaufwärtige Seite des Schlitzes (5) zu begrenzen, sowie mit einem äußeren Kupplungsflansch (3) ausgeführt ist,
wobei die stromabwärtige Einheit mit einer geneigten oder gekrümmten Innenumfangsfläche (6) an ihrem stromaufwärtigen Ende ausgeführt ist, um die stromabwärtige Seite des Schlitzes zu begrenzen, ferner mit einer Ringnut (8) an ihrer Außenfläche benachbart ihrem stromaufwärtigen Ende ausgeführt ist sowie mit einem äußeren Kupplungsflansch (9) ausgeführt ist, wobei der sich nach innen verjüngende Teil der Bohrung der stromabwärtigen Einheit eine sich von der geneigten oder gekrümmten Fläche (6) in Richtung stromabwärts erstreckende, verjüngte geneigte Fläche (7) umfaßt, und
wobei die Verbindungseinheit (C) eine entfernbare Außenumfangsrohreinheit umfaßt, welche, wenn sie mit der stromaufwärtigen und der stromabwärtigen Einheit zusammengebaut ist, den Schlitz und die Ringnut an der stromabwärtigen Einheit überdeckt und mit ihren beiden Enden in Dichtkontakt mit den Kupplungsflanschen der stromaufwärtigen und der stromabwärtigen Einheit steht, um durch Zusammenwirken mit der Ringnut die Kammer (10) zu begrenzen.

3. Vorrichtung nach Anspruch 2, bei der die Verbindungseinheit (C) mit einem Kanal (12) zur gleichmäßigen Zufuhr von komprimiertem Gas zu der Verteilkammer (10) ausgeführt ist.

## Revendications

1. Dispositif destiné à être utilisé pour la production d'un écoulement fluidique hélicoïdal coanda, comprenant un ensemble tubulaire amont (A) ayant un alésage traversant, un ensemble tubulaire aval (B) ayant un alésage traversant qui se rétrécit vers l'intérieur dans la direction aval sur au moins une partie de sa longueur, et un ensemble de liaison (C) aménagé pour relier lesdits ensembles amont et aval sous forme tubulaire continue et d'une manière telle qu'une fente annulaire (5) pour produire l'écoulement fluidique hélicoïdal coanda dans l'ensemble aval est définie entre les extrémités adjacentes desdits ensembles, la largeur de cette fente étant réglable par le réglage de la liaison entre l'ensemble amont et/ou l'ensemble aval et l'ensemble de liaison, grâce à quoi l'ensemble de liaison forme une chambre annulaire (10) entourant la fente annulaire (5), caractérisé en ce que la chambre annulaire communique avec un orifice d'entrée (11) destiné au gaz comprimé par l'intermédiaire de deux conduits (12) qui s'ouvrent sur des côtés pratiquement opposés de la périphérie annulaire de la chambre pour fournir du gaz comprimé dans la chambre de manière régulière.

2. Dispositif selon la revendication 1, dans lequel ledit ensemble amont forme une surface circonférentielle externe verticale ou inclinée (2) au niveau de son extrémité aval pour définir le côté amont de ladite fente (5), et un flasque externe d'accouplement (3); ledit ensemble aval forme une surface circonférentielle interne inclinée ou incurvée (6) au niveau de son extrémité amont pour définir le côté aval de ladite fente, ladite partie se rétrécissant vers l'intérieur de l'alésage dudit ensemble aval comprenant une surface conique inclinée (7) s'étendant depuis ladite surface inclinée ou incurvée (6) dans la direction aval, une rainure annulaire (8) sur sa surface externe adjacente à son extrémité amont, et un flasque d'accouplement externe (9); et ledit ensemble de liaison (C) comprend un ensemble externe tubulaire périphérique démontable qui, lorsqu'il est assemblé avec lesdits ensembles amont et aval, recouvre ladite fente et ladite rainure annulaire sur l'ensemble aval, et dont les deux extrémités sont en contact étanche avec lesdits flasques d'accouplement des ensembles amont et aval, de manière à définir la chambre (10) en coopération avec ladite rainure annulaire.

3. Dispositif selon la revendication 2, dans lequel ledit ensemble de liaison (C) forme un conduit (12) pour amener régulièrement le gaz comprimé dans ladite chambre de distribution (10).
